# EUROPEAN PATENT APPLICATION

(11) **EP 2 301 398 A2**
(43) Date of publication of application: **30.03.2011**
(21) Application number: 10176495.9
(22) Date of filing: 13.09.2010
(51) Int. Cl.: A47J 37/07

(54) **Cooking stove**

(30) Priority: 25.09.2009 TW 098217790
(71) Applicant: aFire Inc., Evanston, IL 60201 (US)
(72) Inventor: Chang, Freddie, Arcadia, CA 91006 (US)
(74) Representative: Lang, Christian

(57) **Abstract**

A cooking stove of the present invention includes a stove body (50) and a controlling mechanism. The stove has a lower opening (53) which is adapted for air to flow therethrough. The controlling mechanism includes a screen and an elevator means. The screen is disposed beneath the lower opening (53). The elevator means is used to adjust a height of the screen so as to enable the screen to selectively move close to or away from the lower opening (53). As such, the flow rate of air flowed into the stove body via the lower opening (53) is adjustable.

## Description

### BACKGROUND OF THE INVENTION

### Field of the Invention

The present invention relates to a cooking stove.

### Description of the Prior Art

Charcoal is always to be lit as a heat source in cooking stoves for barbecue. The burning rate of such solid fuel is usually controlled by adjusting flow rate of air source.

Some conventional cooking stoves, such as disclosed in US 6,349,713, have an air supply window (7) and an opening/closing door (7a). An air flow passage is adjustable by controlling the door (7a).

Other cooking stoves, such as disclosed in US 4,416,248 and US 4,777,927, have a plurality of elongated slots and a plurality of arms. Although the arms are adapted for cleaning ashes in the stove, the arms can still selectively close or open the elongated slots. The air flow may also be controlled by the arms.

### SUMMARY OF THE INVENTION

The main object of the present invention is to provide another mechanism for controlling air flow for a cooking stove.

To achieve the above and other objects, a cooking stove of the present invention includes a stove body and a controlling mechanism. The stove body has an annular shell which defines an upper opening and a lower opening. The controlling mechanism includes a screen and an elevator means. The screen is disposed beneath the lower opening. The elevator means is used to adjust a height of the screen so as to enable the screen to selectively move close to or away from the lower opening.

The present invention will become more obvious from the following description when taken in connection with the accompanying drawings, which show, for purpose of illustrations only, the preferred embodiment(s) in accordance with the present invention.

### BRIEF DESCRIPTION OF THE DRAWINGS

Fig. 1 is a stereogram showing a prefered embodiment of the present invention;
Fig. 2 is a breakdown drawing showing a prefered embodiment of the present invention;
Fig. 3 is a stereogram showing a controlling mechanism of the present invention;
Fig. 4 is a breakdown drawing showing a controlling mechanism of the present invention;
Fig. 5 is a breakdown drawing showing a controlling mechanism of the present invention;
Fig. 6 is a partial perspective view showing a prefered embodiment of the present invention;
Fig. 7 is a cross-sectional view showing a using status of the present invention;
Fig. 8 is a cross-sectional view showing a using status of the present invention;
Fig. 9 is a cross-sectional view showing a using status of the present invention;
Fig. 10 is a cross-sectional view showing a using status of the present invention;
Fig. 11 is a perspective view showing a using status of the present invention;
Fig. 12 is a partial side view showing a using status of the present invention;
Fig. 13 is a partial side view showing a using status of the present invention;
Fig. 14 is a partial side view showing a using status of the present invention.

### DETAILED DESCRIPTION OF THE PREFERRED EMBODIMENTS

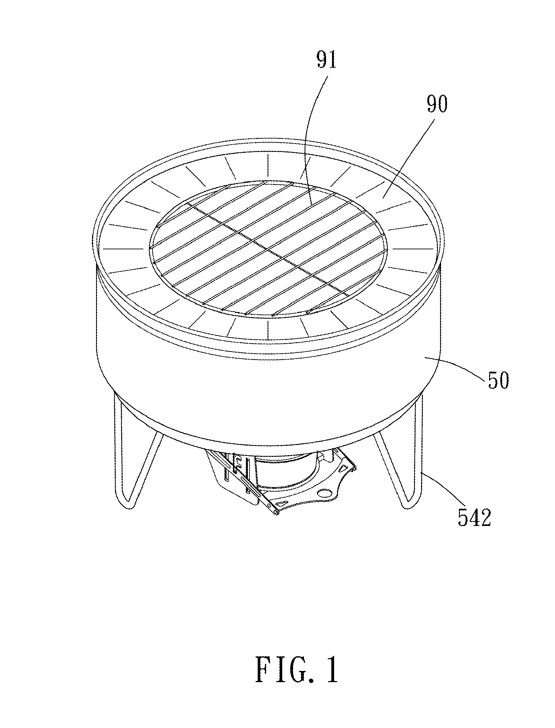

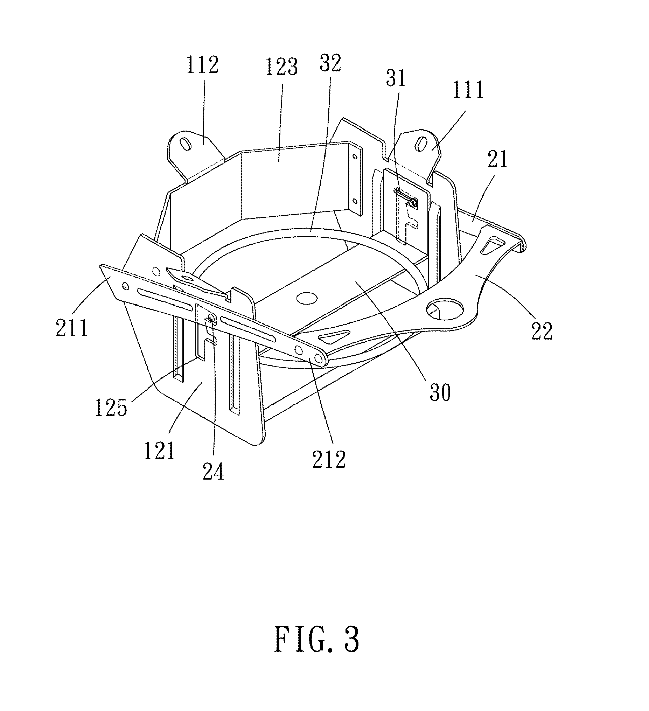

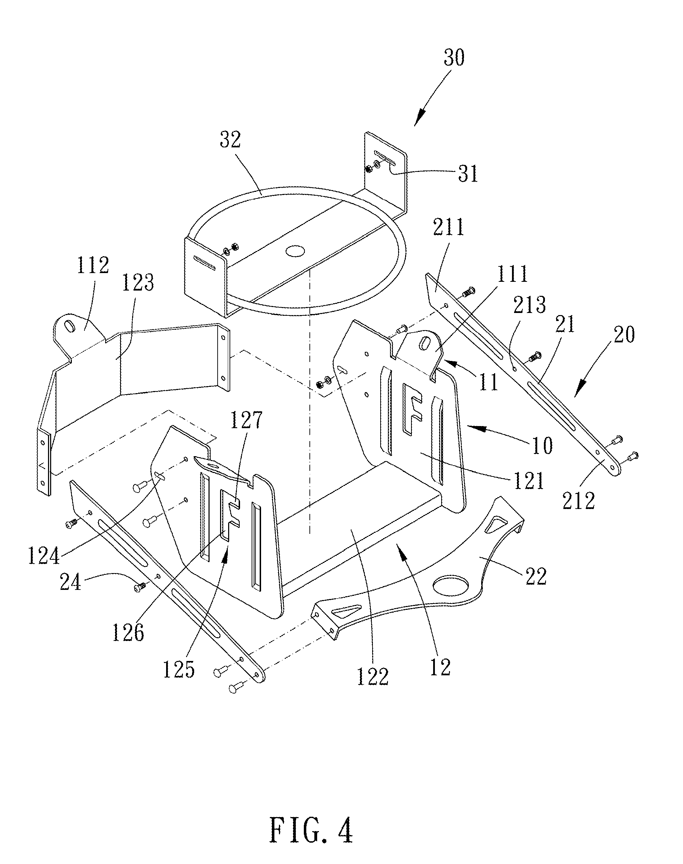

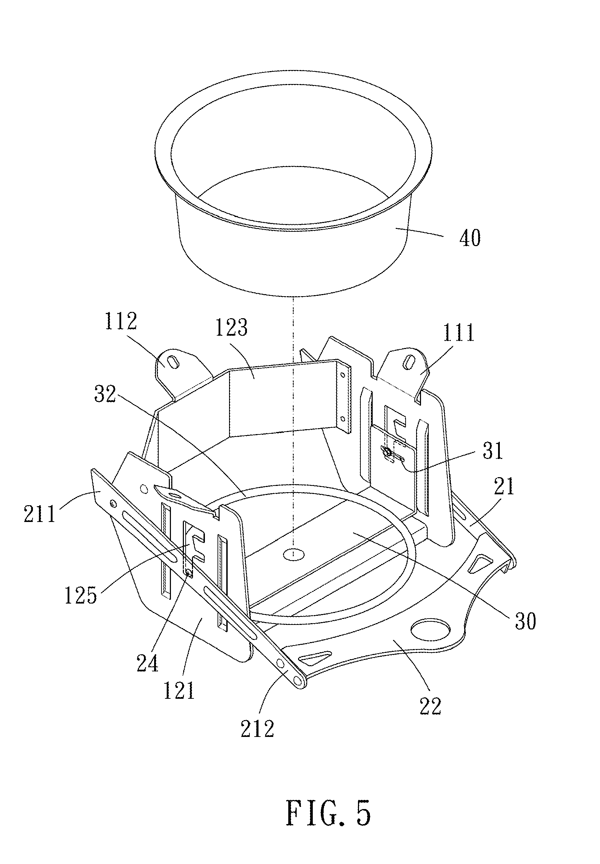

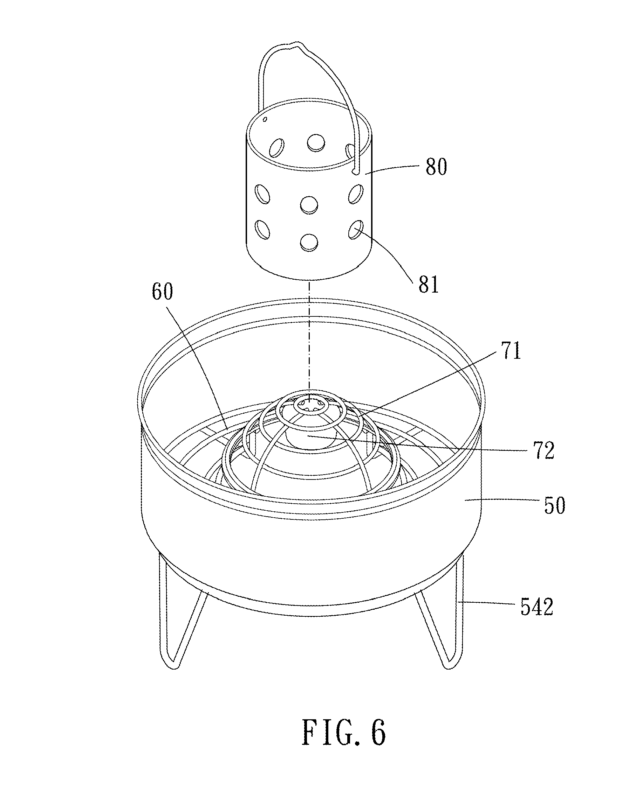

Please refer to Fig. 1 to Fig. 6. A cooking stove of the present invention includes a stove body 50 and a controlling mechanism. The cooking stove may further include a coal grid 60, an igniting grid 70, an incloser 80, an annular cover plate 90 and a gridiron 91.

The stove body 50 has an annular shell 51 which defines an upper opening 52 and a lower opening 53. The lower opening 53 is smaller than the upper opening 52. The stove body 50 has a lower portion being tapered such that the air flow rate accelerates as the air enters the stove body 50 of bigger cross section via the lower opening 53 of smaller cross section. In addition, a negative pressure of the stove body 50 will draw the air into the stove body 50 to promote its air circulation. A base 54 is adapted to support the stove body 50. Preferably, the base 54 has a displacement portion 541 corresponding to the contour of the stove body 50, and has several supportive portions 542. The stove body 50, on the other hand, has a stepped outer engaging section 55 to engage with the displacement portion 45. In other possible embodiments of the present invention, several struts may protrude downward from the stove body for supporting on the ground.

The controlling mechanism is disposed under the stove body 50, and is located beneath the lower opening 53. The stove body 50 is adapted for solid fuel, such as charcoal, to be put therein. The solid fuel can be lit. At least part of the air which is necessary for burning is drawn into the stove body 50 via the lower opening 53. The controlling mechanism includes an elevator means and a screen. The screen is disposed beneath the lower opening 53. The elevator means is used to adjust a height of the screen so as to enable the screen to selectively move close to or away from the lower opening 53.

More particularly, the elevator means may include a main body 10 and an adjuster 20. The main body 10 has a fixation portion 11 and a connecting portion 12. The fixation portion 11 is fixed to a bottom of the stove body 50. More specifically, the connecting portion 12 includes two corresponding connecting plates 121. A connecter 122 connects between the bottom edges of the connecting plates 121. A surrounding plate 123 is disposed on the front edges of the connecting plates 121. The fixation portion 11 includes two corresponding fixation plates 111 and a secondary fixation plate 112. The fixation plates 111 are individually disposed on top edges of the connecting plates 121. The secondary fixation plate 112 is disposed on a top edge of the surrounding plate 123. The fixation plates 111 and the secondary fixation plate 112 are firmly disposed under the stove body 50 by screwing or other fixation means. Each connecting plate 121 is formed with a pivoting hole 124 and a guiding groove 125. In the present embodiment, each pivoting hole 124 has a lateral length. The guiding groove 125 includes a vertical groove 126 and at least a lateral groove 127. The vertical groove 126 communicates with the lateral groove 127. In the present embodiment, each guiding groove 125 includes two lateral grooves 127. The lateral grooves 127 are parallel to each other, so that the guiding grooves 125 are F-shaped.

The adjuster 20 is movably connected to the connecting portion 12. The adjuster 20 includes two corresponding pivoting poles 21. A first end 211 of each pivoting pole 21 is pivotably connected to the pivoting hole 124 of the connecting portion 12. Each pivoting hole 124 has a lateral length, so that the first ends 211 of the pivoting poles 21 are able to slidably move along the pivoting holes 124. An operation member 22 connects between second ends 212 of the pivoting poles 21. The operation member 22 is adapted for user to drive the pivoting poles 21 to pivot about the pivoting holes 124. Each pivoting pole 21 is formed with a fixing hole 213 which is located between the first end 211 and the second end 212. Two pins 24 are individually inserted in one of the fixing holes 213 and one of the guiding grooves 125, so that a pivoting route of the adjuster 20 is limited. In other words, the adjuster 20 can only move and pivot along a track which is defined by the guiding grooves 125.

The screen includes an elevator portion 30. The screen may further include a pot 40. The elevator portion 30 is located beneath the lower opening 53. The elevator portion 30 and the adjuster 20 are in an operative relationship, so that the adjuster 20 is able to move the elevator portion 30. As such, the elevator portion 30 can move selectively close to or away from the lower opening 53. The burning rate determined by the flow rate of air passed through the lower opening 53 is controllable. More particularly, the elevator portion 30 is U-shaped. Each one of two ends of the elevator portion 30 is formed with a lateral slot 31. The pins 24 are individually inserted into the lateral slots 31. The pins 24 are slidable along the lateral slots 31 with respect to the elevator portion 30. The elevator portion 30 is able to collect ashes dropped from the stove body 50. Preferably, the pot 40 can be disposed on the elevator portion 30. A fixing ring 32 corresponding to the contour of the pot 40 may be disposed on the elevator portion 30.

The coal grid 60 is disposed in the stove body 50, and preferably on the engaging section 55. The coal grid 60 may have a grid opening 61 defined at its center, and it may further have several radial ribs 62, several annular ribs 63 and a supporting coil 64. The radial ribs 62 are radially disposed from the grid opening 61. Each of the radial ribs 62 has a horizontal section 621 and a vertical section 622 extending upward, and each radial rib 62 is substantially L-shaped. The vertical sections 622 of the radial ribs 62 are disposed around the grid opening 61. Each of the annular ribs 63 has a different diameter from the others and is disposed on the horizontal sections 621. The supporting coil 64 is supported by the vertical sections 622 and surrounds the grid opening 61. In such case, the supporting coil 64 is higher than the ribs 62 and 63. The igniting grid 70 is therefore detachably disposed on the supporting coil 64-the center of the coal grid 60. The igniting grid 70 has a protrusive arc grid surface 71 and has a cup 72 disposed under the arc grid surface 71 for liquid fuel such as alcohol gel or solid fuel such as tinder or other fire lighter to dispose therein.

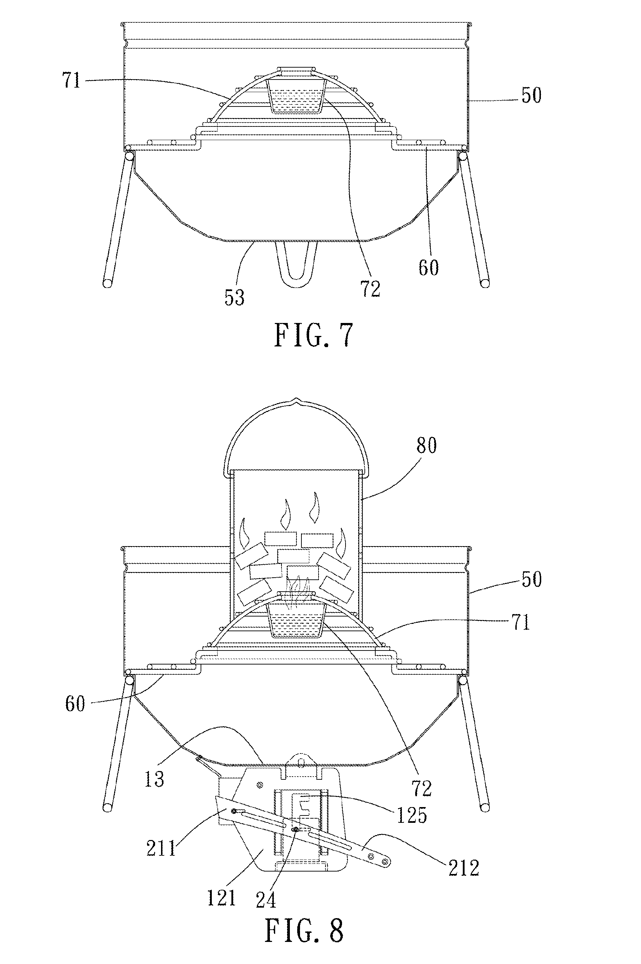

The incloser 80 detachably surrounds the igniting grid 70, and a plurality of venting bores 81 are disposed around its periphery. Both ends of the incloser 80 are open ends. As such, a fire-starting space is defined between the igniting grid 70 and the incloser 80 for solid fuel, such as charcoal, to dispose therein when the solid fuel is being lit, as shown in Fig. 8.

Please refer to Fig. 8. Once the charcoal is lit, the incloser 80 can be detached from the igniting grid 70. Thereby, the charcoal rolls onto the coal grid 60 along the arc grid surface 71 and spreads around the grid opening. The igniting grid 70 is, thereafter, detached from the coal grid 60, finishing the fire-starting procedure.

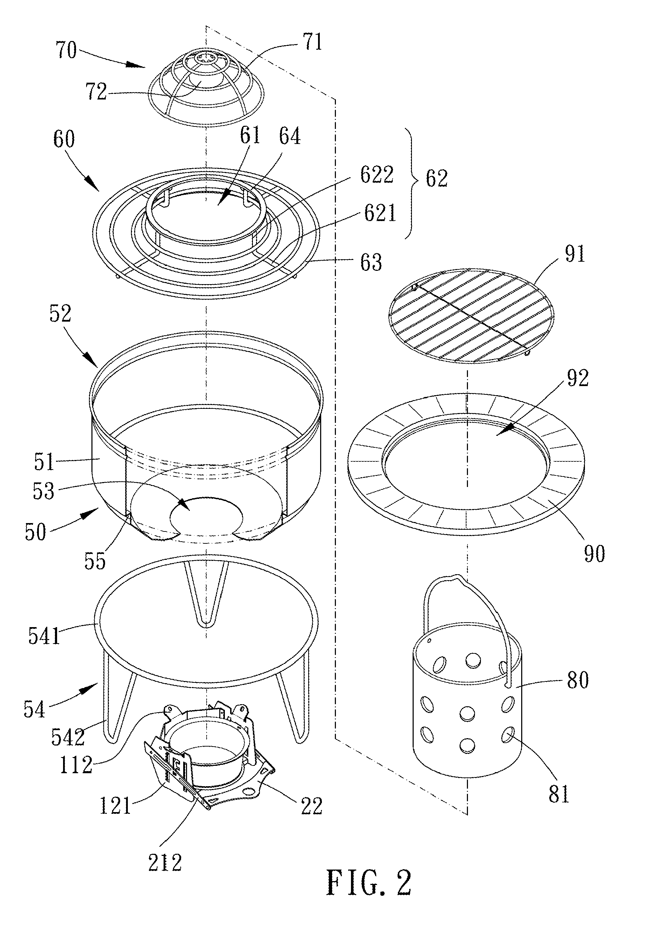

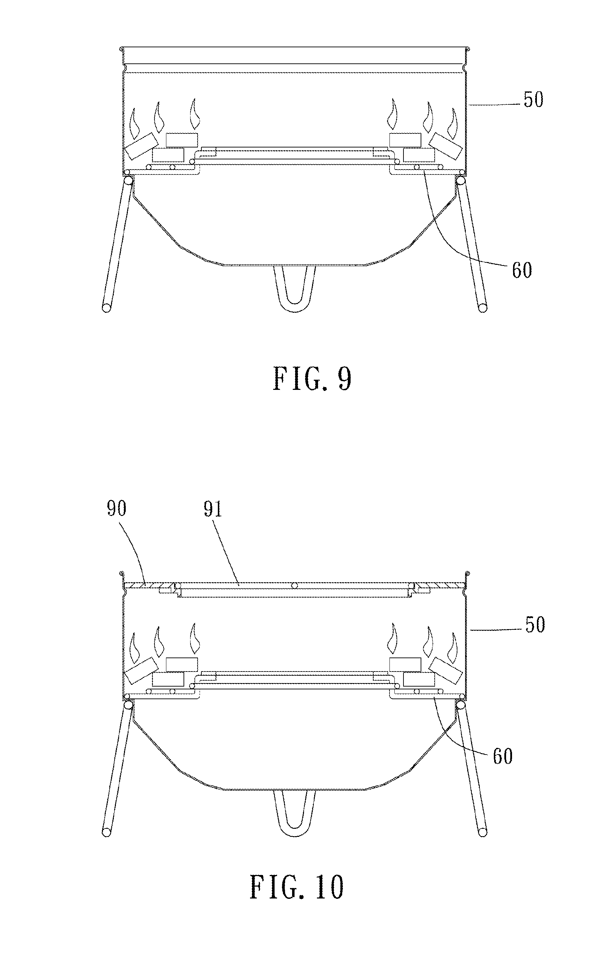

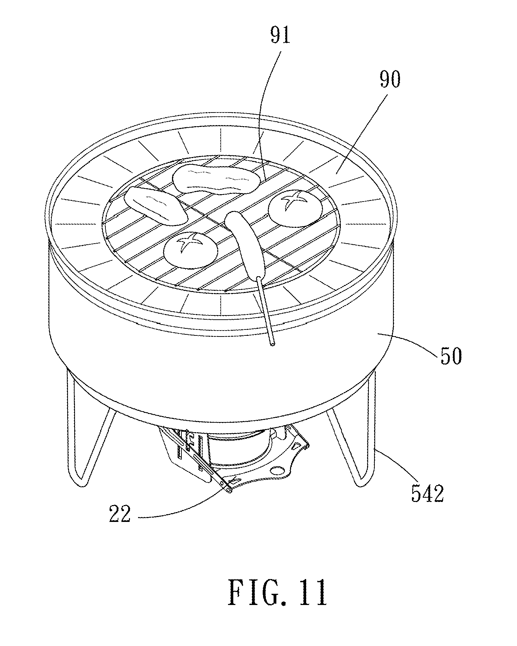

The annular cover plate 90 can be, thereafter, disposed on the upper opening 52 of the stove body 50, as shown in Fig. 2 and Fig. 10. The annular cover plate defines a plate opening 92 at its center, and the gridiron 91 is disposed on the plate opening 92. As such, the cooking stove of the present invention is ready for grilling food in an indirect-heating manner, as shown in Fig. 11.

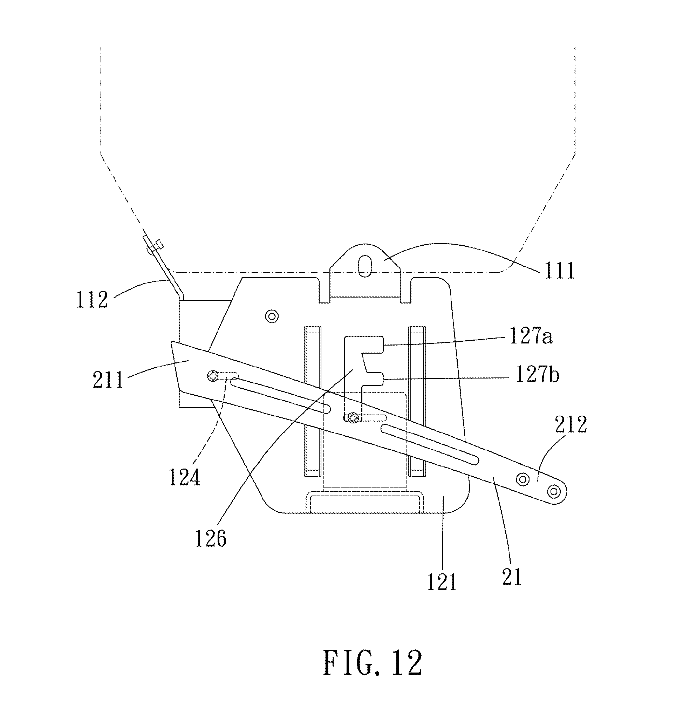

Refer to Fig. 12 to Fig. 14. The controller is able to be operated by users that the adjuster can move along the guiding grooves and pivot about the pivoting holes. As such, the flow rate passed through the lower opening is adjustable, and the burning rate of the fuel in the stove body is controllable. More specifically, it is predictable that the elevator portion 30 is away from the lower opening when the pin 24 is located at a bottom end of the vertical groove 126, as shown in Fig 12. In this case, the flow rate of air flowed into the stove body via the lower opening is larger, so that the burning rate is risen.

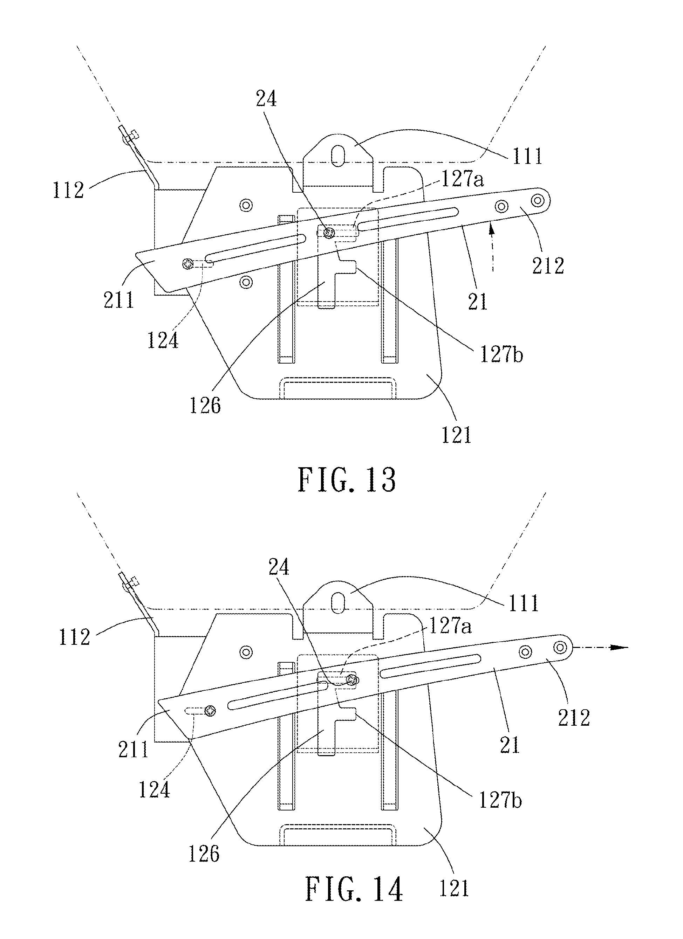

Users can make the adjuster pivot upward about the pivoting hole 124 when the burning rate is excessively high. The pins 24 moves to a top end of the vertical groove 126, as shown in Fig. 13. At the moment, the elevator 30 is close to the lower opening of the stove body. Users can pull the operation member making the pin move into the lateral groove 127a, as shown in Fig. 14. The adjuster can be placed at the predetermined position. Air is obstructed by the elevator portion or the pot, so that the flow rate of air is decreased. Similarly, the pin 24 can be moved to the lateral groove 127b. As such, the flow rate of air is adjustable.

In other possible embodiments of the present invention, the vertical groove 126 may be arc-shaped corresponding to the pivoting route of the adjuster. Also, the quantity of the lateral grooves may be randomly changed.

## Claims

1. A cooking stove, comprising:
a stove body (50), having an annular shell (51) which defines an upper opening (52) and a lower opening (53);
a controlling mechanism, comprising a screen and an elevator means,
the screen being disposed beneath the lower opening (53), the elevator means being used to adjust a height of the screen so as to enable the screen to selectively move close to or away from the lower opening (53).

2. The cooking stove of claim 1, wherein the elevator means comprises:
a main body (10), comprising a fixation portion (11) and a connecting portion (12), the fixation portion (11) is fixed to a bottom of the stove body (50); and
an adjuster (20), being movably connected to the connecting portion (12);
wherein the screen comprises an elevator portion (30), the elevator portion (30) and the adjuster (20) are in an operative relationship, the adjuster (20) is adapted for moving the elevator portion (30), so that the elevator portion (30) is selectively moved close or away from the lower opening (53).

3. The cooking stove of claim 2, wherein the adjuster (20) comprises two pivoting poles (21), a first end (211) of each pivoting pole (21) is pivotably connected to the connecting portion (12), an operation member (22) connects between two second ends (212) of the pivoting poles (21), the connecting portion (12) comprises two connecting plates (121), the fixation portion (11) comprises two fixation plates (111), the fixation plates (111) are individually disposed on top edges of the connecting plates (121), each connecting plate (121) is formed with a pivoting hole (124) and a guiding groove (125), the pivoting hole (124) is adapted for the first end of the pivoting pole (21) to be pivotably connected thereto, the guiding groove (125) comprises a vertical groove (126) and at least one lateral groove (127), the vertical groove (126) communicates with the lateral groove (127), each pivoting pole (21) is formed with a fixing hole (213), two pins (24) are individually inserted in one of the fixing holes (213) and one of the guiding grooves (125), so that a pivoting route of the adjuster (20) is limited.

4. The cooking stove of claim 3, wherein the elevator portion (30) is U-shaped.

5. The cooking stove of claim 4, wherein each one of two ends of the elevator portion (30) is formed with a lateral slot (31) which is adapted for the pin (24) to be inserted therein.

6. The cooking stove of claim 3, wherein the vertical grooves (126) are arc-shaped corresponding to the pivoting route of the adjuster (20).

7. The cooking stove of claim 3, wherein each guiding groove (125) comprises two lateral grooves (127) which are parallel to each other, the guiding grooves (125) are F-shaped, each one of the pivoting holes (124) has a lateral length, so that the pivoting holes (124) are adapted for the pivoting poles (21) to slidably move therealong.

8. The cooking stove of claim 1, further comprising:
a coal grid (60), disposed in the stove body (50);
an igniting grid (70), detachably disposed at a center of the coal grid (60), the igniting grid (70) having a protrusive arc grid surface (71), the igniting grid (70) having a cup (72) disposed under the arc grid surface (71);
an incloser (80), detachably surrounding the igniting grid (70), the incloser (80) having an open upper end and an open lower end, a fire-starting space being defined between the igniting grid (70) and the incloser (80) for solid fuel to dispose therein when the solid fuel is being lit.

9. The cooking stove of claim 8, further comprising an annular cover plate (90) and a gridiron (91), the annular cover plate (90) being disposed on the upper opening (52) of the stove body (50) and defining a plate opening (92) at its center, the gridiron (91) being disposed on the plate opening (92).

10. The cooking stove of claim 8, wherein the coal grid (60) has a grid opening (61) defined at its center, the coal grid (60) further has several radial ribs (62), several annular ribs (63) and a supporting coil (64), the radial ribs (62) are radially disposed from the grid opening (61), each of the radial ribs (62) has a horizontal section (621) and a vertical section (622) extending upward and each radial rib (62) is substantially L-shaped, the vertical sections (622) of the radial ribs (62) are disposed around the grid opening (61), each of the annular ribs (63) has a different diameter from the others and is disposed on the horizontal sections (621), the supporting coil (64) is supported by the vertical sections (622) and surrounds the grid opening (61), the igniting grid (70) is disposed on the supporting coil (64).
